# EUROPEAN PATENT SPECIFICATION

(11) **EP 2 578 441 B1**
(45) Date of publication and mention of the grant of the patent: **03.09.2014**
(21) Application number: 11184155.7
(22) Date of filing: 06.10.2011
(51) Int. Cl.: B60N 2/46, B60N 2/64, B60N 2/24, B60N 2/68, B60N 2/01

(54) **Seat for passenger transport vehicle and passenger transport vehicle comprising such a seat**
Sitz für Passagiertransportfahrzeuge und Passagiertransportfahrzeug mit einem solchen Sitz
Siège pour véhicule de transport de passagers et véhicule de transport de passagers comportant un tel siège

(43) Date of publication of application: 10.04.2013
(73) Proprietor: Iveco France S.A., 69200 Vénissieux (FR)
(72) Inventor: Sauvaget, Thierry, 69780 Toussieu (FR)
(74) Representative: Cinquantini, Bruno

(56) References cited:
- DE-U1-202006 013 033

## Description

The present invention relates to a seat for a passenger transport vehicle, of the type comprising at least one seat portion, comprising an upper support surface able to receive, by vertical bearing, a first portion of a passenger's body, at least one first support element intended to receive, by bearing, a second portion of the passenger's body, arranged overhanging a first edge of said upper support surface.

Passenger transport vehicle refers to any rolling vehicle including a passenger compartment intended to transport passengers, for example a bus, trolley bus, tramway, train or subway car. This type of vehicle comprises seats distributed in the passenger compartment, oriented along the travel axis of the vehicle or along an axis orthogonal to said travel. These seats generally comprise a seat portion and a backrest secured to the seat portion, protruding upward from a back edge of the seat portion. They are therefore adapted to receive a passenger in a single seated position.

The present invention aims in particular to resolve this drawback by proposing a seat for a passenger transport vehicle adapted to receive a passenger in two orthogonal seated positions offering similar comfort.

To that end, the invention relates to a device of the aforementioned type, characterized in that it comprises at least one second support element, intended to receive, by bearing, a third portion of the passenger's body, arranged overhanging a second edge of said upper support surface adjacent and perpendicular to said first edge, and in that the seat portion also comprises two support elements that can receive, by bearing, at least one lower portion of the passenger's back, said support elements protruding from said first and second edges of said support surface.

The inventive device can comprise one or more of the following features, considered alone or according to all technically possible combinations:
- said seat portion comprises at least two ergonomic rims, able to receive, by bearing, the rear surface of the passenger's knees, downwardly curved from at least a third and fourth edge of said support surface,
- said first support element includes a lateral support surface able to receive, by lateral bearing, at least one upper portion of the passenger's back,
- said first support element includes an upper support surface that can receive, by vertical bearing, at least one portion of the passenger's arm,
- said second support element includes a lateral support surface able to receive, by lateral bearing, at least one upper portion of the passenger's back,
- said second support element includes an upper support surface able to receive, by vertical bearing, at least one portion of the passenger's arm,
- the seat comprises a support box for said seat portion, adapted to be fastened to a floor of said vehicle and able to receive the seat portion by surface bearing,
- said box is fixed to the overhang of a wheel of the vehicle,
- said second support element is adapted to be fixed to a longitudinal runner mounted along a wall of the vehicle, parallel to said wall,
- said first support element is adapted to be fixed to a transverse runner protruding from said longitudinal runner orthogonally to said wall,
- the seat also comprises means for supporting a substantially vertical support column, intended in particular to allow the vehicle's passengers to stabilize themselves in the upright position,
- said support means comprise lower support means, able to support a lower end portion of said column, and intermediate support means, which can support said column in the middle portion thereof,
- said intermediate support means comprise a support member for said column, secured to said transverse runner,
- the seat comprises two seat portions symmetrical relative to a vertical plane adjacent to said first support element.

The invention also relates to a passenger transport vehicle, in particular a bus or tramway, comprising at least one seat according to the invention.

The invention will be better understood upon reading the following description, provided solely as an example, and done in reference to the appended drawings, in which:
- Figure 1 is a perspective view of the structure of a pair of seats according to one embodiment of the invention;
- Figure 2 is a semi-exploded perspective view of the pair of seats of Figure 1;
- Figure 3 is an exploded perspective view of the pair of seats of Figure 1;
- Figure 4 is a perspective view of the pair of seats of Figure 1 with a passenger seated in a first seated position; and
- Figure 5 is a perspective view of the pair of seats of Figure 1 with a passenger seated in a second seated position.

Hereafter, the chosen orientations are provided for information and are to be understood relative to the figures. In particular, the terms "upper," "lower," "top" and "bottom" are to be understood relative to the orientation selected in the Figures. These terms are used relative to the orientation of the seats mounted on the chassis frame of the passenger transport vehicle.

Furthermore, the terms "transverse" and "longitudinal" must be understood in relation to the longitudinal axis A-A', which is the travel axis of the passenger transport vehicle.

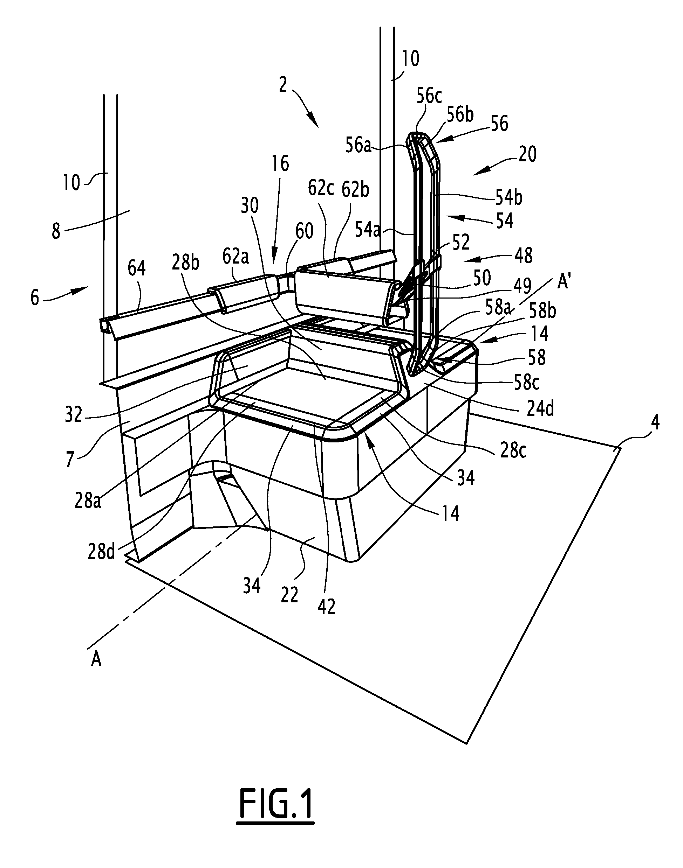

Figures 1 to 5 illustrate a pair 2 of seats according to the invention, placed in a passenger transport vehicle, for example a bus.

Figures 1 to 5 shows certain parts of the vehicle structure, i.e. the floor 4 of the vehicle, a side wall 6 comprising a panel 7 topped with a picture window 8, and two vertical posts 10. The two vertical posts 10 rise along the side wall 6 inside the vehicle, from the floor 4 to the ceiling, not shown, of the vehicle.

The pair 2 of seats rests on the floor 4. It is adjacent to the side wall 6, between the two posts 10. It comprises two seats 12, 12' defining two seating zones symmetrical relative to a middle transverse vertical plane hereafter called middle plane.

The pair 2 of seats comprises two seat portions 14, lateral support elements 16 for the passenger's body, a support structure for the seat portions 14, a support structure for the support elements 16 and a support column 20.

The support structure for the seat portions comprises a support box 22 for the seat portions. The box 22 is substantially parallelepiped. It extends transversely between a first lateral edge adjacent to the side wall 6 and a second lateral edge adjacent to an aisle of the vehicle.

The box 22 is for example hollow, and can be placed above a wheel of the passenger transport vehicle.

The box 22 comprises, on its upper surface, a transverse protrusion 24 for supporting part of a passenger's body and fixing the column 20.

The protrusion 24 extends between the lateral edges of the box 22, at mid-length of the box 22. It has a prismatic shape with a trapezoidal base. It thus comprises two side surfaces 24a, 24b and a horizontal upper surface 24c.

The side surfaces 24a, 24b are bearing planes for the bottom of a passenger's back. They are tilted upward and toward the middle plane. Their upper edges are connected by the upper wall 24c.

The protrusion 24 also comprises, at its end adjacent to the aisle of the vehicle, a tilted surface 24d. The tilted surface 24d is a support and fastening surface for the column 20. It is tilted upward and toward the inside of the seats 12, 12'.

The box 22 comprises, on either side of the protrusion 24, two horizontal support surfaces 26, 26' for a seat portion 14, substantially rectangular, for example square. These two support surfaces 26, 26' are symmetrical relative to the middle plane.

The seat portions 14 are symmetrical relative to the middle plane.

Each seat portion 14 rests on a support surface 26, 26' of the box 22. As shown in particular in Figure 1, it comprises a seat portion part 28, and two support elements, central 30 and side 32, respectively, for the bottom of a passenger's back. The support elements 30, 32 protrude from two adjacent edges 28a, 28b of the seat portion part 28 that are perpendicular to each other. These two edges 28a, 28b, called rear edges, are adjacent to the protrusion 24 and the wall 6 of the vehicle, respectively. Each seat portion 14 also comprises two front rims 34 protruding from the other two edges 28c, 28d, called front edges, of the seat portion part 28.

The seat portion part 28 comprises an upper surface intended to receive, by vertical bearing, part of the passenger's body. It has a shape substantially identical to a support surface 26, 26' of the box 22. The upper surface of the seat portion part 28 is thus substantially rectangular, for example square. The seat portion part 28 has a length and width adapted to receive a passenger in the seated position. The length and width of the seat portion part 28 are for example between 30 and 50 cm.

The lower surface of the seat portion part 28 has a shape substantially combined with the support surface 26, 26' of the box 22. The seat portion part 28 can thus bear against the box 22 by their surfaces.

The central support element 30 extends upward and toward the middle plane P from the rear edge 28b of the seat portion part 28 adjacent to the protrusion 24. Its lower surface has a shape substantially combined with a side wall 24a, 24b of the protrusion 24. The central support element 30 can thus bear against the protrusion 24 by their surfaces.

The side support element 32 extends upward and toward the side wall 6 of the vehicle from the rear edge 28a of the seat portion part 28 adjacent to the side wall 6.

The two front rims 34 are rounded ergonomic rims that can receive, by bearing, the rear surface of the passenger's knees. They are curved downward from the two front edges 28c, 28d of the seat portion part.

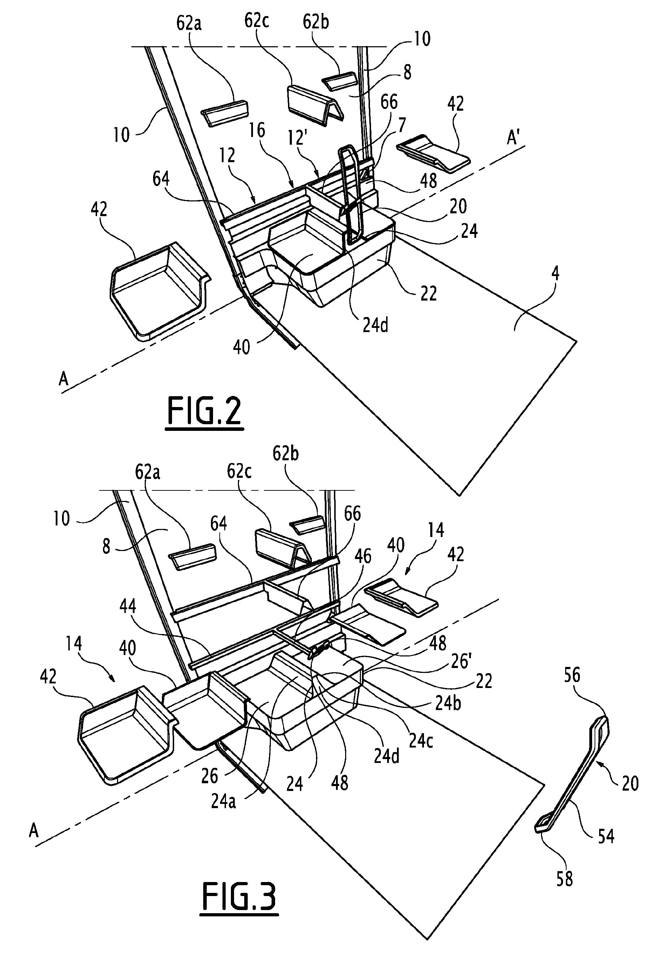

As shown in Figures 2 and 3, each seat portion 14 comprises a dressing 40 and a covering 42, with combined shapes. The dressing 40 rests on the support surface 26, 26' of the box 22. It is for example made from a wood-based material.

The covering 42, intended to improve the comfort of the seat portion, covers the dressing 40. The covering 42 for example comprises foam trim covered with a fabric.

The support structure for the support elements 16 is shared by the two seats 12, 12'. It comprises two horizontal support runners 44, 46, perpendicular to each other, visible in Figure 3.

A first longitudinal runner 44 is fixed to the two posts 10 inside the vehicle, above the box 22, at the picture window 8. The longitudinal runner 44 is for example welded to the two posts 10.

A second transverse runner 46 protrudes perpendicularly to the longitudinal runner 44 overhanging the protrusion 24. It is fixed, at one of its ends, to the longitudinal runner 44, substantially at mid-length thereof, and at its free end to a support member 48 of the column 20.

The runners 44, 46 are for example made from profiled steel.

The support member 48 is generally Y-shaped. It comprises means for fastening to the transverse runner 46 and support means for the column 20.

The support member 48 thus comprises a horizontal lug 49, fixed at one of its ends to the free end of the transverse runner 46, and extended at its second end by two oblique lugs 50, 52. The oblique lugs 50, 52 are symmetrical relative to the middle plane P. They protrude from the horizontal lug 49 upward and toward the aisle of the vehicle, in two directions oblique to the middle plane P, symmetrical relative to said plane. Each oblique lug 50, 52 comprises, at its upper end, a support element for the column 20, for example a vertical tubular opening.

The column 20 is intended to allow standing passengers to stabilize themselves when the vehicle is in motion.

The column 20 comprises a central portion 54, which passengers can hold, an upper end portion 56, and a lower end portion 58, which is intended to fix the column 20 on the seat 12, 12'.

The column 20 is a double column, symmetrical relative to the middle plane P. Its central portion 54 thus comprises two parallel support bars 54a, 54b, which are substantially vertical. The bars 54a, 54b are tubular, with a substantially circular or polygonal horizontal section. Their maximum diameter or transverse dimension is for example between 30 mm and 40 mm. The outer surface of each bar 54a, 54b has a shape combined with the inner surface of the tubular opening of the oblique lug 50, 52.

The upper 56 and lower 58 end portions of the column 20 are symmetrical relative to a middle horizontal plane. The lower end portion 58 comprises two oblique portions 58a, 58b protruding from the lower ends of the bars 54a, 54b, downward and toward the wall 24d of the protrusion 24, connected by a horizontal lower portion 58c.

Symmetrically, the upper end portion 56 comprises two oblique portions 56a, 56b protruding from the upper ends of the bars 54a, 54b, upward and toward the wall 6 of the vehicle, connected by a horizontal upper portion 56c.

The column 20 therefore forms a closed loop, the bars 54a, 54b being connected to each other by the upper 56 and lower 58 end portions. The separation between the bars 54a and 54b is substantially equal to the distance between the tubular openings of the support element.

The column 20 can be made from stainless steel or painted steel.

The lower end portion 58 bears against the box 22, more specifically against the tilted surface 24d of the protrusion 24. The lower end portion 58 is fixed to said tilted surface 24d, for example using screws.

Furthermore, each of the bars 54a, 54b is maintained, substantially at the middle thereof, by the support member 48. In the illustrated embodiment, each bar 54a, 54b is mounted in a tubular opening of an oblique lug 50, 52. The outer surface of each bar then bears by its surface against the inner surface of a tubular opening. The column 20 is thus maintained in the lower end portion thereof and in an intermediate portion, for example in its middle, by support means incorporated into the seat 12, 12'.

The lateral support elements 16 comprise a dressing and coverings 62a, 62b, 62c. The lateral support elements 16 can receive, by bearing, part of a passenger's body, for example his back or one of his arms.

The dressing covers the runners 44, 46 and supports the coverings 62a, 62b, 62c. It comprises two horizontal cornices 64, 66, perpendicular to each other.

A first longitudinal cornice 64 covers the longitudinal runner 44. It has a length substantially equal to the length of the longitudinal runner 44. Its transverse section is in the shape of an inverted L.

A second transverse cornice 66 protrudes perpendicularly to the longitudinal cornice 64. Its length is substantially equal to the length of the transverse runner 46. It has a transverse section in the shape of an inverted V with a flat bottom. The transverse cornice 66 thus comprises a horizontal upper wall fixed at one of its ends to the longitudinal cornice 46 and two tilted side walls extending downward from the upper wall. The transverse cornice 66 thus covers the transverse runner 46.

The coverings 62a, 62b, 62c are comfort elements of the seat. They partially cover the dressing ref. They comprise a central covering 62c and two side coverings 62a, 62b. The central covering 62c can cover the transverse cornice 66. Each side covering 62a, 62b can cover part of the longitudinal cornice 64, on either side of the transverse cornice 66.

Each covering 62a, 62b, 62c for example comprises foam trim covered with a fabric.

The longitudinal cornice 64, covered with the side coverings 62a, 62b, thus defines, on either side of the protrusion 24, two side support elements for a passenger's body, symmetrical relative to the middle plane P. These side elements can receive a passenger's arm or back by bearing.

The transverse cornice 66, covered with the central covering 62c, is a central support element for a passenger's body. In particular, its side walls define two central support zones for a passenger's body, symmetrical relative to the middle plane, and its upper wall defines a support zone for a passenger's arm.

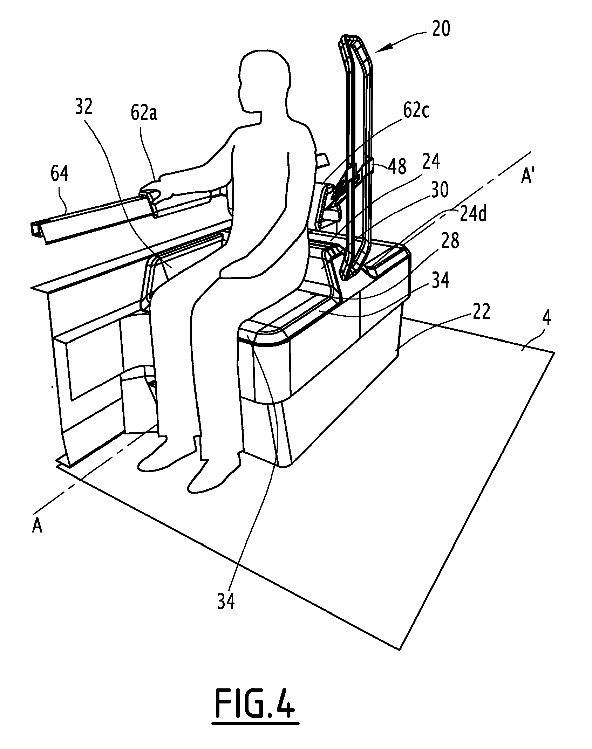

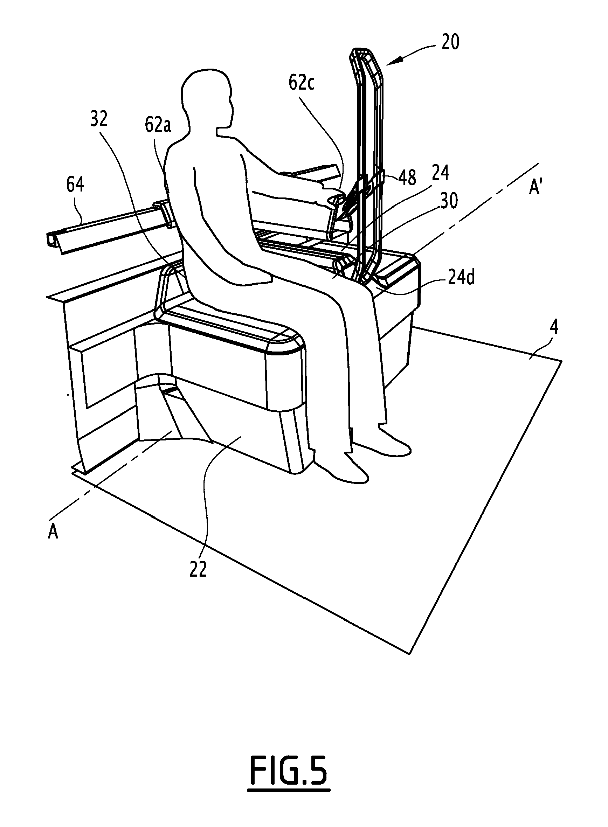

Each seat 12, 12' can receive a seated passenger, in two orthogonal positions, illustrated in Figures 4 and 5.

In a first position, illustrated in Figure 4, the passenger, seated on the seat 12, is oriented along the longitudinal axis A-A' of the vehicle. In that position, the transverse cornice 66 forms the backrest of the seat 12, and the longitudinal cornice 64 is an armrest for said seat 12.

The passenger's buttocks and thighs bear vertically on the seat portion 28 and the backs of his knees rest on a front rim 28d of the seat portion 14. A lower portion of his back bears against the central support element 30 and an upper portion of his back bears against the transverse cornice 66, more specifically against a side wall of said cornice covered with the central covering 62c. Furthermore, his right arm bears on the side covering 62a of the longitudinal cornice 64.

In the second position, illustrated in Figure 5, the passenger is oriented orthogonally to the longitudinal axis A-A'. In this position, the transverse cornice 66 forms an armrest of the seat 12, and the longitudinal cornice forms the backrest of said seat 12.

The passenger's buttocks and thighs bear vertically on the seat portion 28, and the backs of his knees rest on a front rim of the seat portion 14. A lower portion of his back bears against the side support element 32, and an upper portion of his back bears against the side covering 62a of the longitudinal cornice 64. Furthermore, his left arm bears on the transverse cornice 66, more specifically against its upper wall covered with the central covering 62c.

It is thus understood from the preceding description how the seat according to the invention offers two comfortable seated positions. In particular, the seat portion is adapted to receive a passenger seated in two orthogonal directions, due in particular to its substantially square shape and the presence of rounded rims arranged on its two front edges. The lateral support elements, adapted to be used as backrest or armrest, also make it possible to receive, by bearing, a seated passenger in two orthogonal directions.

Furthermore, the seat according to the invention is easy to install and maintain. In particular, the side support elements being separate from the seat portion, it is possible, in case of wear, for example, to replace the seat portion and/or this or these element(s) independently of one another.

## Claims

1. A seat (12, 12') for a passenger transport vehicle, of the type comprising at least one seat portion (14), comprising an upper support surface (28) able to receive, by vertical bearing, a first portion of a passenger's body, at least one first support element (66, 62c) intended to receive, by bearing, a second portion of the passenger's body, arranged overhanging a first edge (28b) of said upper support surface (28), **characterized in that** it comprises at least one second support element (64, 62a, 62b), intended to receive, by bearing, a third portion of the passenger's body, arranged overhanging a second edge (28a) of said upper support surface (28) adjacent and perpendicular to said first edge (28b), and **in that** the seat portion (14) also comprises two support elements (30, 32) that can receive, by bearing, at least one lower portion of the passenger's back, said support elements (30, 32) protruding from said first and second edges (28a, 28b) of said support surface (28).

2. The seat (12, 12') according to claim 1, **characterized in that** said seat portion (14) comprises at least two ergonomic rims (34), able to receive, by bearing, the rear surface of the passenger's knees, downwardly curved from at least a third and fourth edge (28c, 28d) of said support surface (28).

3. The seat (12, 12') according to any one of the preceding claims, **characterized in that** said first support element (66, 62c) includes a lateral support surface able to receive, by lateral bearing, at least one upper portion of the passenger's back.

4. The seat (12, 12') according to any one of the preceding claims, **characterized in that** said first support element (66, 62c) includes an upper support surface that can receive, by vertical bearing, at least one portion of the passenger's arm.

5. The seat (12, 12') according to any one of the preceding claims, **characterized in that** said second support element (64, 62a, 62b) includes a lateral support surface able to receive, by lateral bearing, at least one upper portion of the passenger's back.

6. The seat (12, 12') according to any one of the preceding claims, **characterized in that** said second support element (64, 62a, 62b) includes an upper support surface able to receive, by vertical bearing, at least one portion of the passenger's arm.

7. The seat (12, 12') according to any one of the preceding claims, **characterized in that** it comprises a support box (22) for said seat portion (14), adapted to be fastened to a floor (4) of said vehicle and able to receive the seat portion (14) by surface bearing.

8. The seat (12, 12') according to claim 7, **characterized in that** said box (22) is fixed to the overhang of a wheel of the vehicle.

9. The seat (12, 12') according to any one of the preceding claims, **characterized in that** said second support element (64, 62a, 62b) is adapted to be fixed to a longitudinal runner (44) mounted along a wall (6, 8) of the vehicle, parallel to said wall (6, 8).

10. The seat (12, 12') according to claim 9, **characterized in that** said first support element (66, 62c) is adapted to be fixed to a transverse runner (46) protruding from said longitudinal runner (44) orthogonally to said wall (6, 8).

11. The seat (12, 12') according to any one of the preceding claims, **characterized in that** it also comprises means (48, 24d) for supporting a substantially vertical support column (20), intended in particular to allow the vehicle's passengers to stabilize themselves in the upright position.

12. The seat (12, 12') according to claim 11, **characterized in that** said support means (48, 24d) comprise lower support means (24d), able to support a lower end portion (58) of said column (20), and intermediate support means (48), which can support said column (20) in the middle portion thereof.

13. The seat (12, 12') according to claims 10 and 12, **characterized in that** said intermediate support means comprise a support member (48) for said column (20), secured to said transverse runner (46).

14. The seat (12, 12') according to any one of the preceding claims, **characterized in that** it comprises two seat portions (14) symmetrical relative to a vertical plane adjacent to said first support element (66, 62c).

15. A passenger transport vehicle, in particular a bus or tramway, comprising at least one seat (12, 12') according to any one of the preceding claims.

## Patentansprüche

1. Sitz (12, 12') für ein Passagiertransportfahrzeug des Typs, mit zumindest einem Sitzabschnitt (14), der eine obere Stützfläche (28) umfasst, die in der Lage ist, durch vertikale Auflage einen ersten Abschnitt eines Körpers eines Fahrgastes aufzunehmen, zumindest einem ersten Stützelement (66, 62c), das dazu bestimmt ist, durch Auflage einen zweiten Abschnitt des Körpers eines Fahrgastes aufzunehmen, das über einem ersten Rand (28b) der oberen Stützfläche (28) überhängend angeordnet ist,
**dadurch gekennzeichnet, dass**
er zumindest ein zweites Stützelement (64, 62a, 62b) umfasst, das dazu bestimmt ist, durch Auflage einen dritten Abschnitt des Körpers des Fahrgastes aufzunehmen, das überhängend über einem zweiten Rand (28a) der oberen Stützfläche (28) benachbart und rechtwinklig zu dem ersten Rand (28b) angeordnet ist, und dass der Sitzabschnitt (14) auch zwei Stützelemente (30, 32) umfasst, die durch Auflage zumindest einen unteren Abschnitt des Rückens des Fahrgastes aufnehmen können, wobei die Stützelemente (30, 32) von dem ersten und zweiten Rand (28a, 28b) der Stützfläche (28) vorragen.

2. Sitz (12, 12') nach Anspruch 1,
**dadurch gekennzeichnet, dass**
der Sitzabschnitt (14) zumindest zwei ergonomische Einfassungen (34) umfasst, die in der Lage sind, durch Auflage die rückwärtige Fläche der Knie des Fahrgastes aufzunehmen, die von zumindest einem dritten und vierten Rand (28c, 28d) der Stützfläche (28) abwärts gekrümmt sind.

3. Sitz (12, 12') nach einem der vorhergehenden Ansprüche,
**dadurch gekennzeichnet , dass**
das erste Stützelement (66, 62c) eine Seitenstützfläche aufweist, die in der Lage ist, durch seitliche Auflage zumindest einen oberen Abschnitt des Rückens des Fahrgastes aufzunehmen.

4. Sitz (12, 12') nach einem der vorhergehenden Ansprüche,
**dadurch gekennzeichnet , dass**
das erste Stützelement (66, 62c) eine obere Stützfläche aufweist, die durch vertikale Auflage zumindest einen Abschnitt des Arms des Fahrgastes aufnehmen kann.

5. Sitz (12, 12') nach einem der vorhergehenden Ansprüche,
**dadurch gekennzeichnet , dass**
das zweite Stützelement (64, 62a, 62b) eine Seitenstützfläche aufweist, die in der Lage ist, durch seitliche Auflage zumindest einen oberen Abschnitt des Rückens des Fahrgastes aufzunehmen.

6. Sitz (12, 12') nach einem der vorhergehenden Ansprüche,
**dadurch gekennzeichnet , dass**
das zweite Stützelement (64, 62a, 62b) eine obere Stützfläche aufweist, die in der Lage ist, durch vertikale Auflage zumindest einen Abschnitt des Armes des Fahrgastes aufzunehmen.

7. Sitz (12, 12') nach einem der vorhergehenden Ansprüche,
**dadurch gekennzeichnet , dass**
er einen Stützkasten (22) für den Sitzabschnitt (14) umfasst, der derart angepasst ist, dass er an einem Boden (4) des Fahrzeugs befestigbar und in der Lage ist, den Sitzabschnitt (14) durch Oberflächenauflage aufzunehmen.

8. Sitz (12, 12') nach Anspruch 7,
**dadurch gekennzeichnet , dass**
der Kasten (22) an dem Überhang eines Rades des Fahrzeugs befestigt ist.

9. Sitz (12, 12') nach einem der vorhergehenden Ansprüche,
**dadurch gekennzeichnet , dass**
das zweite Stützelement (64, 62a, 62b) derart angepasst ist, dass es an einem Längskanal (44) befestigt werden kann, der entlang einer Wand (6, 8) des Fahrzeugs parallel zu der Wand (6, 8) montiert ist.

10. Sitz (12, 12') nach Anspruch 9,
**dadurch gekennzeichnet , dass**
das erste Stützelement (66, 62c) derart angepasst ist, an einem Querkanal (46) befestigt zu werden, der von dem Längskanal (44) orthogonal zu der Wand (6, 8) vorragt.

11. Sitz (12, 12') nach einem der vorhergehenden Ansprüche,
**dadurch gekennzeichnet , dass**
er auch ein Mittel (48, 24d) zum Stützen einer im Wesentlichen vertikalen Stützsäule (20) umfasst, die insbesondere dazu bestimmt ist, eine Stabilisierung der Fahrgäste des Fahrzeugs selbst in der aufrechten Position zuzulassen.

12. Sitz (12, 12') nach Anspruch 11,
**dadurch gekennzeichnet , dass**
das Stützmittel (48, 24d) ein unteres Stützmittel (24d), das in der Lage ist, einen unteren Endabschnitt (58) der Säule (20) zu stützen, und ein Zwischenstützmittel (48) umfasst, das die Säule (20) in dem Mittelabschnitt davon stützen kann.

13. Sitz (12, 12') nach einem der Ansprüche 10 und 12,
**dadurch gekennzeichnet, dass**
das Zwischenstützmittel ein Stützelement (48) für die Säule (20) umfasst, das an dem Querkanal (46) angebracht ist.

14. Sitz (12, 12') nach einem der vorhergehenden Ansprüche,
**dadurch gekennzeichnet , dass**
er zwei Sitzabschnitte (14) symmetrisch relativ zu einer vertikalen Ebene benachbart dem ersten Stützelement (66, 62c) umfasst.

15. Fahrgasttransportfahrzeug, insbesondere ein Bus oder eine Straßenbahn, mit zumindest einem Sitz (12, 12') nach einem der vorhergehenden Ansprüche.

## Revendications

1. Siège (12, 12') pour un véhicule de transport de passager, du type comprenant au moins une partie de siège (14), comprenant une surface porteuse supérieure (28) en mesure de recevoir, par appui vertical, une première partie d'un corps de passager, au moins un premier élément de support (66, 62c) destiné à recevoir, par appui, une deuxième partie du corps de passager, agencé en porte-à-faux d'une première arête (28b) de ladite surface porteuse supérieure (28), **caractérisé en ce qu'**il comprend au moins un second élément de support (64, 62a, 62b) destiné à recevoir, par appui, une troisième partie du corps de passager, agencé en porte-à-faux d'une seconde arête (28a) de ladite surface porteuse supérieure (28) adjacente et perpendiculaire à ladite première arête (28b), et **en ce que** la partie de siège (14) comprend également deux éléments de support (30, 32) qui peuvent recevoir, par appui, au moins une partie inférieure du dos du passager, lesdits éléments de support (30, 32) faisant saillie desdites première et seconde arêtes (28a, 28b) de ladite surface porteuse (28).

2. Siège (12, 12') selon la revendication 1, **caractérisé en ce que** ladite partie de siège (14) comprend au moins deux rebords ergonomiques (34) en mesure de recevoir, par appui, la surface arrière des genoux du passager, courbés vers le bas à partir d'au moins une troisième et une quatrième arête (28c, 28d) de ladite surface porteuse (28).

3. Siège (12, 12') selon l'une quelconque des revendications précédentes, **caractérisé en ce que** ledit premier élément de support (66, 62c) comprend une surface porteuse latérale en mesure de recevoir, par appui latéral, au moins une partie supérieure du dos du passager.

4. Siège (12, 12') selon l'une quelconque des revendications précédentes, **caractérisé en ce que** ledit premier élément de support (66, 62c) comprend une surface porteuse supérieure qui peut recevoir, par appui vertical, au moins une partie du bras du passager.

5. Siège (12, 12') selon l'une quelconque des revendications précédentes, **caractérisé en ce que** ledit second élément de support (64, 62a, 62b) comprend une surface porteuse latérale en mesure de recevoir, par appui latéral, au moins une partie supérieure du dos du passager.

6. Siège (12, 12') selon l'une quelconque des revendications précédentes, **caractérisé en ce que** ledit second élément de support (64, 62a, 62b) comprend une surface porteuse supérieure en mesure de recevoir, par appui vertical, au moins une partie du bras du passager.

7. Siège (12, 12') selon l'une quelconque des revendications précédentes, **caractérisé en ce qu'**il comprend un bac de support (22) pour ladite partie de siège (14) adapté pour être fixé à un plancher (4) dudit véhicule et en mesure de recevoir la partie de siège (14) par appui de surface.

8. Siège (12, 12') selon la revendication 7, **caractérisé en ce que** ledit bac (22) est fixé sur le porte-à-faux d'une roue du véhicule.

9. Siège (12, 12') selon l'une quelconque des revendications précédentes, **caractérisé en ce que** ledit second élément de support (64, 62a, 62b) est adapté pour être fixé à une glissière longitudinale (44) montée le long d'une paroi (6, 8) du véhicule, parallèlement à ladite paroi (6, 8).

10. Siège (12, 12') selon la revendication 9, **caractérisé en ce que** ledit premier élément de support (66, 62c) est adapté pour être fixé à une glissière transversale (46) faisant saillie de ladite glissière longitudinale (44) orthogonalement à ladite paroi (6, 8).

11. Siège (12, 12') selon l'une quelconque des revendications précédentes, **caractérisé en ce qu'**il comprend également des moyens (48, 24d) pour supporter une colonne porteuse sensiblement verticale (20), destinée en particulier à permettre aux passagers du véhicule de se stabiliser dans la position verticale.

12. Siège (12, 12') selon la revendication 11, **caractérisé en ce que** lesdits moyens de support (48, 24d) comprennent des moyens de support inférieurs (24d) en mesure de supporter une partie d'extrémité inférieure (58) de ladite colonne (20) et des moyens de support intermédiaires (48) qui peuvent supporter ladite colonne (20) dans la partie centrale de celle-ci.

13. Siège (12, 12') selon les revendications 10 et 12, **caractérisé en ce que** lesdits moyens de support intermédiaires comprennent un élément de support (48) pour ladite colonne (20), attaché à ladite glissière transversale (46).

14. Siège (12, 12') selon l'une quelconque des revendications précédentes, **caractérisé en ce qu'**il comprend deux parties de siège (14) symétriques par rapport à un plan vertical adjacent audit premier élément de support (66, 62c).

15. Véhicule de transport de passager, en particulier un bus ou un tramway, comprenant au moins un siège (12, 12') selon l'une quelconque des revendications précédentes.
